# EUROPÄISCHE PATENTANMELDUNG

(11) **EP 2 337 019 A1**
(43) Veröffentlichungstag der Anmeldung: **22.06.2011**
(21) Anmeldenummer: 09178605.3
(22) Anmeldetag: 10.12.2009
(51) Int. Cl.: G10K 11/162, E04B 1/84, B32B 5/22, B32B 15/06, B60R 13/08

(54) **Schallabsorptionsvorrichtung, insbesondere für Verkehrswege und Fahrzeuge**

(71) Anmelder: Zingelmann, Jochen, 53639 Königswinter (DE); Glasner, Gerd, 53819 Neunkirchen-Seelscheid (DE)
(72) Erfinder: Zingelmann, Jochen, 53639 Königswinter (DE); Glasner, Gerd, 53819 Neunkirchen-Seelscheid (DE)
(74) Vertreter: von Kreisler Selting Werner

(57) **Zusammenfassung**

Die Schallabsorptionsvorrichtung, insbesondere für Verkehrswege und Fahrzeuge, ist versehen mit einem Formkörper(10,28), der geschlossenzellige Elastomerstücke (20) aufweist, die untereinander durch einen Elastomerschaum (22) verbunden sind.

## Beschreibung

Die Erfindung betrifft eine Schallabsorptionsvorrichtung, deren Anwendungsbereich insbesondere bei Fahrzeugen und Fahrzeugverkehrswegen zu sehen ist. Grundsätzlich lässt sich die Schallabsorptionsvorrichtung überall dort einsetzen, wo es um Schallschutz geht, d. h. wo die Erzeugung und/oder Ausbreitung von Luft- bzw. Körperschall reduziert werden soll.

Es ist bekannt, zur Schalldämpfung, d. h. zur Verringerung von Schallreflektionen, weiche Kunststoffmaterialien wie beispielsweise Elastomere und insbesondere auch geschäumte elastomere Kunststoffmaterialien einzusetzen. Ferner ist es bekannt, dass strukturierte Oberflächen, auf die Luftschall auftrifft, eine höhere Schallabsorption, d. h. Schalldämpfung, aufweisen, als dies bei glatten Flächen der Fall ist. Ein Beispiel für den Einsatz von Schallschutzelementen entlang von Bahntrassen findet sich beispielsweise in DE-A-42 20 547. Akustikteile aus Verbundschaumstoffen sind aus DE-A-103 11 245 bekannt.

Neben der Schalldämpfung, d. h. der Absorption von Schallreflektionen, spielt auch die Schalldämmung in der Akustik eine große Rolle. Mit "Schalldämmung" ist der Grad der Reduktion des Durchtritts von Schall (Körperschall) durch ein Bauteil gemeint. Bei der Schalldämmung kommen Materialien mit einem vergleichsweise hohen spezifischen Gewicht zum Einsatz, die eine schalltechnisch bzw. akustisch "träge" Masse darstellen. Derartige Schalldämmelemente sind in den oben genannten Schriften beschrieben.

Aufgabe der Erfindung ist es, eine Schallabsorptionsvorrichtung zu schaffen, die sich einfach und kostengünstig bei großer akustischer Effizienz herstellen lässt.

Zur Lösung dieser Aufgabe wird mit der Erfindung eine Schallabsorptionsvorrichtung insbesondere für Verkehrswege und Fahrzeuge vorgeschlagen, die versehen ist mit einem Formkörper, der geschlossenzellige Elastomerstücke aufweist, die untereinander durch einen Elastomerschaum (schaumbildender Klebstoff aus elastomerem Material) verbunden sind.

Erfindungsgemäß umfasst die Schallabsorptionsvorrichtung einen elastomeren Formkörper, der aus geschlossenzelligen Elastomerstücken und einem diese untereinander verbindenden Elastomerschaum besteht. Bei den Elastomerstücken kann es sich zweckmäßigerweise um Rezyklat handeln. Insbesondere eignen sich Elastomerstücke, die aus geschäumtem, geschlossenzelligem EPDM-Material bestehen.

Der Elastomerschaum weist zweckmäßigerweise ebenfalls eine geschlossenzellige Struktur auf.

Unter "geschlossenzellig" im Sinne der Erfindung wird ein geschäumtes Material verstanden, das (hermetisch) geschlossene Luft- bzw. allgemein Gaszellen aufweist, die miteinander in keinerlei Fluidverbindung stehen.

Grundsätzlich gilt, dass für die erfindungsgemäße Schallabsorption insbesondere das vergleichsweise weiche und nachgiebige Elastomermaterial ausschlaggebend ist. Dieses Material weist einzelne geschlossene Zellen auf, wodurch verhindert wird, dass der Formkörper von durchgehenden Kanälen durchzogen ist. Außerdem besteht ein weiterer Vorteil der geschlossenzelligen Formkörperstruktur darin, dass diese kein Wasser aufnimmt. Dies ist insbesondere bei der Anwendung der erfindungsgemäßen Schallabsorptionsvorrichtung im Verkehrswegebereich und überall dort von Vorteil, wo die Schallabsorptionsvorrichtung den Umweltbedingungen wie Niederschlag oder dergleichen ausgesetzt ist.

Die Elastomerstücke können auch aus PU-Schaum bestehen. Grundsätzlich eignet sich jeder Elastomerschaum, sofern er geschlossenzellig und "schallweich" ist. Selbiges gilt für das Material, mit dem die einzelnen Elastomerstücke untereinander verbunden sind.

Der nach der Erfindung leichtgewichtige und damit ein geringes spezifisches Gewicht aufweisende Formkörper lässt sich in vorteilhafter Weiterbildung der Erfindung mit einer Schalldämmungsschicht in Sandwichbauweise kombinieren, wobei die Schalldämmungsschicht ebenfalls vorzugsweise aus Elastomermaterial und insbesondere aus Elastomergranulat, insbesondere Gummi, besteht und somit strukturiert ist. Derartige Materialien sind in Matten- bzw. Plattenform bekannt und ebenfalls in den eingangs genannten Schriften beschrieben. Die strukturierte Schalldämmungsschicht aus Gummirecyclat (z. B. aus Altreifen) weist z. B. eine Dichte von 0,6 bis 1,1 g/cm³ und ein Porenvolumen von z. B. kleiner als 20 % insbesondere kleiner als 15 % auf.

Die Schalldämmungsschicht, deren spezifisches Gewicht, wie bereits oben erläutert, vergleichsweise groß ist, um eine akustisch dämmend wirkend "träge" Masse zu bilden, kann ein- oder beidseitig mit dem erfindungsgemäßen Formkörper aus geschlossenzelligen Elastomerstücken, die unter anderem mit einem insbesondere ebenfalls geschlossenzelligen Elastomerschaum verbunden sind, versehen sein. Von Vorteil für die mechanische Steifigkeit der Absorptionsvorrichtung ist es, wenn diese eine Tragschicht aufweist, bei der es sich zweckmäßigerweise um eine Trägerplatte aus zwei Metallblechen handelt, zwischen denen sich Hartschaum befindet. Derartige Trägerplatten bzw. Paneele sind aus dem Leichtbau und Hallenbau bekannt. Die mit Hartschaum ausgefüllten Metallpaneelen können beidseitig glatt oder beidseitig gewellt oder einseitig glatt und auf der anderen Seite gewellt ausgebildet sein. Die gewellte Struktur erhöht die Steifigkeit der Tragkonstruktion. Eine derartige Tragkonstruktion ist im Regelfall einseitig mit der Schalldämmungsschicht versehen, auf der dann wiederum der erfindungsgemäße Formkörper (in diesem Fall vorzugsweise in Plattenform) aufgebracht ist. Es ist aber auch möglich, dass die Tragkonstruktion beidseitig mit Schalldämmungsschicht und plattenförmigem Formkörper versehen ist. Grundsätzlich reicht es für die Schalldämmungsfunktion aus, wenn die Tragkonstruktion lediglich auf einer Seite mit der Schalldämmungsschicht versehen ist.

Was den Formkörper anbelangt, so ist es von Vorteil, wenn dessen der Schallquelle zugewandte Seite eine Schnittoberfläche aufweist, also durch Schneiden entstanden ist. Durch das Schneiden des Formkörpers aus geschlossenzelligen Elastomerstücken, die mit Elastomerschaum verbunden sind, wird erreicht, dass die Schnittfläche nahezu ausschließlich aus aufgeschnittenen Zellen gebildet ist, die zum Innern des Formkörpers hin geschlossen sind. Insbesondere recycelte Elastomerstücke, die aus zerhäckselten oder zermahlten bzw. zerschnittenen Produkten aus geschlossenzelligem Elastomermaterial bestehen, weisen immer noch geschlossene Oberflächenbereiche auf, die nach Fertigstellung des Formkörpers teilweise dessen Außenseite definieren. Durch den Schneidvorgang werden im Wesentlichen sämtliche sich beidseitig der Schneidebene erstreckende Elastomerstücke des Formkörpers zerschnitten, so dass nunmehr die Zellenstruktur der einzelnen Elastomerstücke freiliegt. Dies wiederum ist für die Schalldämpfung, d. h. die Absorption von Schallreflektionen von Vorteil.

Die der Schallquelle zugewandte Fläche des Formkörpers sollte zweckmäßigerweise strukturiert sein, um die dem Schall ausgesetzte Oberfläche des Formkörpers zu vergrößern. Der Formkörper könnte grundsätzlich unter Verwendung einer entsprechenden Form, in der sich die Elastomerstücke und der diese verbindende Elastomerschaum unter definiertem Druck bis zur Aushärtung des Elastomerschaums befinden, gebildet werden. Dann aber besteht die Gefahr, dass die der Schallquelle zugewandte vergrößerte Oberfläche des Formkörpers auch geschlossene Bereiche aufweist (siehe oben). Daher wird der Formkörper zweckmäßigerweise geschnitten. Damit die Schnittfläche mit Strukturen versehen ist, wird zum Schneiden des Formkörpers in vorteilhafter Weiterbildung der Erfindung eine Profilschneidmaschine eingesetzt, wie sie beispielsweise beim Formschaumschneiden für insbesondere Verpackungsmaterialien oder dergleichen eingesetzt wird. Profilschneidmaschinen werden unter anderem von der Fecken-Kirfel GmbH & Co. KG Maschinenfabrik, Aachen, angeboten.

Allgemein sei noch darauf hingewiesen, dass der Elastomerschaum aus Brandschutzgründen mit insbesondere mineralischen Additiven versehen sein kann.

Die Erfindung wird nachfolgend anhand eines Ausführungsbeispiels und unter Bezugnahme auf die Zeichnung näher erläutert. Im Einzelnen zeigen dabei:
- Fig. 1: eine Form zur Bildung eines Block-Formkörpers aus geschlossenzelligen Elastomerstücken mit diese verbindendem ebenfalls geschlossenzelligem Elastomerschaum,
- Fig. 2: eine schematische Darstellung einer Profilschneidvorrichtung zur Bildung zweier plattenförmiger Formkörper aus dem gemäß Fig. 1 hergestellten Block-Formkörper, wobei die beiden Platten-Formkörper strukturierte Schnittoberflächen aufweisen, und
- Fig. 3: ein Beispiel für die Anwendung eines gemäß Fig. 2 aus einem Block-Formkörper hergestellten Platten-Formkörpers bei einer Schallschutzwand, wie sie beispielsweise längs einer Schienentrasse ange-ordnet werden kann.

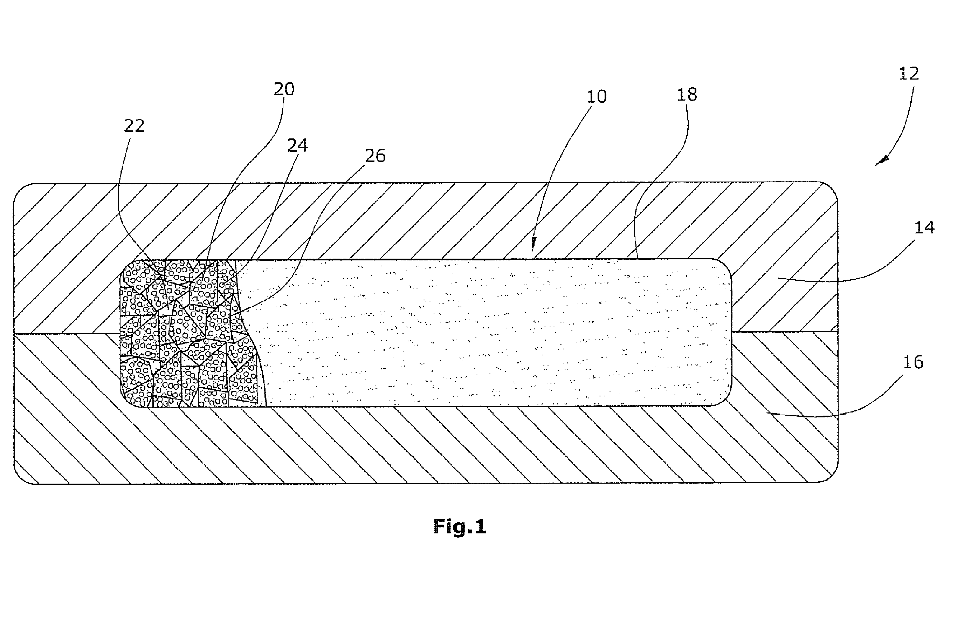

Fig. 1 zeigt schematisch die Herstellung eines Block-Formkörpers 10 in einer im Schnitt dargestellten Form 12 mit zwei Formhälften 14,16 und in einem Teilausschnitt die Zusammensetzung des Block-Form-Körpers 10 im Detail. Der Formenraum 18 ist mit Elastomerstücken 20 versehen, bei denen es sich um EPDM-Rezyklat handelt, das durch Zerhäckseln, Zermahlen oder dergleichen entstanden ist. Zwischen den einzelnen Elastomerstücken befindet sich ein Elastomerschaum 22 auf beispielsweise PU-Basis. Die Elastomerstücke 20 weisen geschlossene Zellen 24 auf, die also untereinander nicht verbunden sind. Die Oberflächen der Elastomerstücke 20 können geschlossen oder aber mit offenen Zellen versehen sein, die aber ihrerseits zu den anderen Zellen 24 der betreffenden Elastomerstücke 20 keine Verbindung haben. Auch der Elastomerschaum 22 ist geschlossenzellig, so dass auch seine Zellen 26 keine Verbindung untereinander aufweisen.

Das Rezyklat aus Elastomerstücken 20 und der Elastomerschaum 22 werden unter definiertem Druck in der Form 12 komprimiert, bis der Elastomerschaum 22 ausreagiert ist.

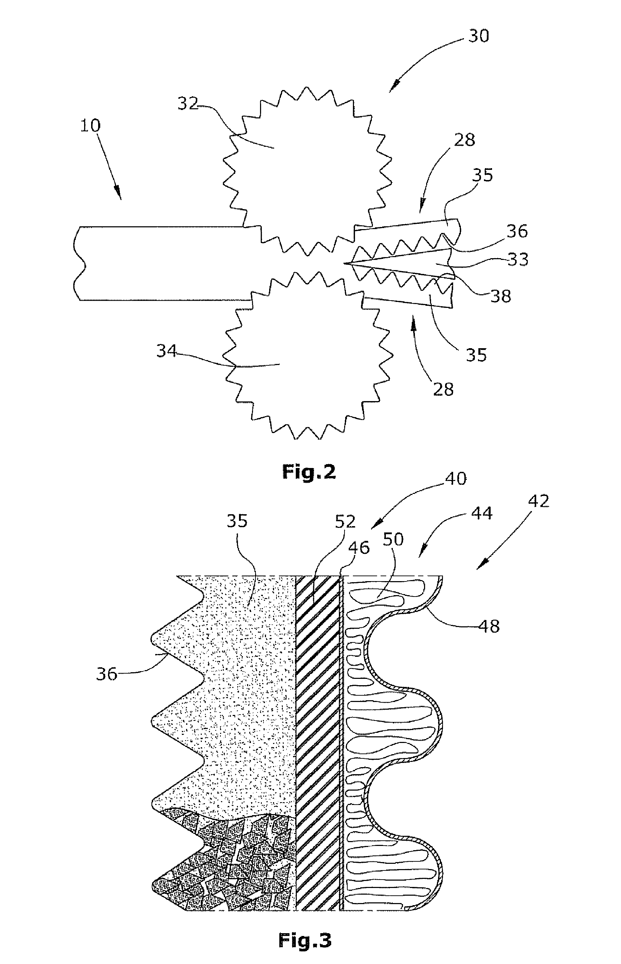

Anschließend wird der fertiggestellte Block-Formkörper 10 zu Tafelmaterial 28 geschnitten. Hierbei kann der Block-Formkörper 10 in einzelne glatte Schnittflächen aufweisende Platten geschnitten werden. Die Schnittflächen bestehen dabei zum weit überwiegenden Teil aus aufgeschnittenen Zellen 24 bzw. 26 der Elastomerstücke 20 sowie des Elastomerschaums 22. Von Vorteil ist es aber, wenn die Schnittflächen des aus dem Block-Formkörper 10 gewonnen Tafelmaterials 28 strukturiert sind. Hierzu wird ein Profilschneidvorrichtung 30 eingesetzt, die grundsätzlich bekannt ist und schematisch in Fig. 2 gezeigt ist. Der zu schneidende Block-Formkörper 10 wird zwischen zwei profilierten Klemmwalzen 32,34 hindurch transportiert. Im Bereich vor und hinter sowie zwischen den Klemmwalzen 32,34 wird der Block-Formkörper 10 komprimiert. Bevor der komprimierte Block-Formkörper wieder expandiert (nämlich nach dem Passieren der beiden Klemmwalzen 32,34), wird der Block-Formkörper 10 gegen eine insbesondere feststehende Schneidvorrichtung 33 bewegt, die in diesem Ausführungsbeispiel den Block-Formkörper 10 in zwei Platten-Formkörper 35 mit strukturierten Schnittflächen 36,38 zerschneidet. Diese beiden Platten-Formkörper 35 werden nun zu Schallabsorptionszwecken eingesetzt, wobei ihre strukturierten Schnittflächen 36 der Schallquelle zugewandt angeordnet werden.

Fig. 3 zeigt die Applikation eines Platten-Formkörpers 35 (in einem Teilausschnitt wiederum mit detaillierter Darstellung des internen Aufbaus der Zusammensetzung), wie er beispielsweise gemäß den Fign. 1 und 2 hergestellt ist, bei einem Schallschutzwandelement 40, wie es längs von Verkehrswegen (Straßen, Schienentrassen oder dergleichen) angeordnet ist. Das Schallschutzwandelement 40 weist als Tragstruktur 42 eine Trägerplatte 44 auf, die in diesem Ausführungsbeispiel ein glattes Metallblech 46 und ein gewelltes Metallblech 48 aufweist, zwischen denen sich ein die beiden Metallbleche 46,48 verbindender Hartschaum 50 befindet. Diese Trägerplatte 44 weist eine große Steifigkeit bei geringem Gewicht auf. Die der Schallquelle zugewandte Seite der Trägerplatte 44, im Ausführungsbeispiel gemäß Fig. 3 also das glatte Metallblech 46, ist mit einer insbesondere strukturierten Gummibahn 52 aus Elastomergranulat versehen. Derartige poröse Gummibahnen 52 sind insbesondere bei Schallschutzwänden bekannt und dienen zur Herstellung von akustisch "träger" Masse. Auf der Gummibahn 52 befindet sich der Platten-Formkörper 35, dessen strukturierte Schnittfläche 36 die der Schallquelle zugewandte Seite bildet und die schallreflektionsarm ist. Die Verbindung der Gummibahn 52 mit der Trägerplatte 44 sowie des Platten-Formkörpers 35 mit der Gummibahn 52 erfolgt zweckmäßigerweise mit einem dauerelastischen schaumbildenden Klebstoff aus elastomerem Material.

Mit dem erfindungsgemäßen Formkörper ließen sich bei Versuchen außerordentlich ansprechende Schallabsorptionsgrade innerhalb des relevanten Frequenzbereichs erzielen. So konnte nachgewiesen werden, dass eine Schallschutzwand mit dem Aufbau gemäß Fig. 3 insbesondere bei tiefen Frequenzen im Bereich zwischen 100 und 500 Hz bisher noch nicht erreichte Schallabsorptionsgrade aufwies. Es konnte insbesondere nachgewiesen werden, dass die Akustik-Anforderungen der Richtlinien bezüglich Lärmschutzanlagen an Eisenbahnstrecken voll erfüllt werden.

Der Einsatzbereich der erfindungsgemäßen Schallabsorptionsvorrichtung ist vielfältig. So kann der Formkörper im Fahrzeug- und Verkehrswegebau Einsatz finden. Hier ist der Einsatz bei sämtlichen Arten von Fahrzeugen (Schienenfahrzeuge, spurungebundene Fahrzeuge, Wasserfahrzeuge, Luftfahrzeuge) sowie bei sämtlichen Arten von Verkehrswegen (Straßen, Bahnstrecken) möglich. Auch an und in Gebäuden lässt sich die erfindungsgemäße Schallabsorptionsvorrichtung einsetzen.

## Patentansprüche

1. Schallabsorptionsvorrichtung, insbesondere für Verkehrswege und Fahrzeuge, mit
- einem Formkörper(10,28), der geschlossenzellige Elastomerstücke (20) aufweist, die untereinander durch einen Elastomerschaum (22) verbunden sind.

2. Schallabsorptionsvorrichtung nach Anspruch 1, **dadurch gekennzeichnet, dass** der Elastomerschaum (22) geschlossenzellig ist.

3. Schallabsorptionsvorrichtung nach Anspruch 1 oder 2, **dadurch gekennzeichnet, dass** der Formkörper (28) mindestens eine Schnittfläche (36) aufweist, in der die Zellen (24) der Elastomerstücke (20) und/oder des Elastomerschaums (22) offen sind.

4. Schallabsorptionsvorrichtung nach einem der Ansprüche 1 bis 3, **dadurch gekennzeichnet, dass** die Elastomerstücke (20) EPDM aufweisen.

5. Schallabsorptionsvorrichtung nach einem der Ansprüche 1 bis 4, **dadurch gekennzeichnet, dass** der Elastomerschaum PU aufweist.

6. Schallabsorptionsvorrichtung nach einem der Ansprüche 1 bis 5, ferner **gekennzeichnet durch** eine Schalldämmungsschicht (52), die zusammen mit dem Formkörper (28) nach Art eines Sandwich-Aufbaus angeordnet, insbesondere verbunden oder unter Anlage an dem Formkörper (28) angeordnet ist.

7. Schallabsorptionsvorrichtung nach Anspruch 6, **dadurch gekennzeichnet, dass** die Schalldämmungsschicht (52) eine insbesondere poröse Elastomerschicht, insbesondere nicht geschäumt, aufweist.

8. Schallabsorptionsvorrichtung nach Anspruch 7, **dadurch gekennzeichnet, dass** die Schalldämmungsschicht (52) Elastomergranulate aufweist.

9. Schallabsorptionsvorrichtung nach einem der Ansprüche 1 bis 8, ferner **gekennzeichnet durch** eine Tragkonstruktion (42), insbesondere Trägerplatte (44) zum Halten des Formkörpers (28) und, sofern vorhanden, der Schalldämmungsschicht (52).

10. Schallabsorptionsvorrichtung nach Anspruch 9, **dadurch gekennzeichnet, dass** die Trägerplatte (44) ein Sandwich aus mit Hartschaum (50) verbundenen Metallblechen (46,48) aufweist.

11. Schallabsorptionsvorrichtung nach einem der Ansprüche 1 bis 9, **dadurch gekennzeichnet, dass** der Formkörper (28) eine strukturierte Fläche, insbesondere eine strukturierte Schnittfläche (36) aufweist.
